# EUROPÄISCHE PATENTSCHRIFT

(11) **EP 3 234 507 B1**
(45) Veröffentlichungstag und Bekanntmachung des Hinweises auf die Patenterteilung: **23.01.2019**
(21) Anmeldenummer: 15787156.7
(22) Anmeldetag: 19.10.2015
(51) Int. Cl.: G01C 21/36, B60R 11/04

(54) **KAMERASYSTEM UND VERFAHREN ZUM BETREIBEN EINES KAMERASYSTEMS**
CAMERA SYSTEM AND METHOD FOR OPERATING A CAMERA SYSTEM
SYSTÈME DE CAMÉRA ET PROCÉDÉ POUR FAIRE FONCTIONNER UN SYSTÈME DE CAMÉRA

(30) Priorität: 15.12.2014 DE 102014225875
(43) Veröffentlichungstag der Anmeldung: 25.10.2017
(73) Patentinhaber: Robert Bosch GmbH, 70442 Stuttgart (DE)
(72) Erfinder: NIEMZ, Volker, 71229 Leonberg (DE)
(86) Internationale Anmeldenummer: PCT/EP2015/074090
(87) Internationale Veröffentlichungsnummer: WO 2016/096193

(56) Entgegenhaltungen:
- DE-A1-102007 053 305
- DE-A1-102011 102 744
- DE-A1-102011 111 854

## Beschreibung

### Stand der Technik

Die vorliegende Erfindung betrifft ein Kamerasystem, das für ein Fahrzeug vorgesehen ist. Außerdem betrifft die Erfindung ein Fahrzeug, das ein derartiges Kamerasystem umfasst. Schließlich betrifft die Erfindung ein Verfahren zum Betreiben eines Kamerasystems.

Aus dem Stand der Technik sind verschiedene Kamerasysteme, insbesondere für Fahrzeug, bekannt. Für Fahrzeuge sind beispielsweise Rear-View-Systeme oder Surround-View-Systeme bekannt, bei denen ein Fahrer des Fahrzeugs das Bild von zumindest einer am Fahrzeug angeordneten Kamera angezeigt bekommt, um das Einschätzen der Dimensionen des Fahrzeuges zu erleichtern. Dabei ist es oftmals eine Anforderung, die Kameras möglichst unauffällig an der Karosserie des Fahrzeugs anzubringen. Gleichzeitig soll dem Fahrer das Betrachten des Kamerabilds erleichtert werden, indem dieses mit Overlays versehen wird, die beispielsweise anzeigen, in welche Richtung das Fahrzeug bei aktuellem Lenkwinkel fahren wird. Hierzu muss das Kamerabild relativ zum Fahrzeug kalibriert werden, damit beispielsweise ein verkippter Einbau der Kamera nicht zu verkippten Overlays führt. Ein beispielhaftes Verfahren für eine derartige Kalibrierung ist in DE 10 2007 053 305 A1 offenbart. Ein weiteres Kamerasystem mit einer kalibrierbaren Kamera ist außerdem aus der DE 10 2011 102 744 A1 bekannt. Gleichzeitig kennt der Stand der Technik Kameras, die derart an Fahrzeugen anbringbar sind, dass diese aus der Karosserie des Fahrzeuges ausklappbar sind. Somit ist die Kamera im Betrieb ausgeklappt, während sie außerhalb ihrer Betriebszeit in die Karosserie des Fahrzeuges eingeklappt und damit vor äußeren Einflüssen geschützt ist. Da die Kamera für jede Kalibrierung ausgeklappt werden muss, ist es eine Anforderung, dass diese Kalibrierung möglichst schnell durchführbar ist, sodass der Zeitraum, in dem die Kamera in einem ausgeklappten Zustand verbleibt, minimiert wird. Eine klappbare Kamera ist beispielsweise in der DE 10 2011 111 854 A1 offenbart.

### Offenbarung der Erfindung

Das erfindungsgemäße Kamerasystem gemäß Anspruch 1 umfasst eine Kamera, eine Klappvorrichtung und eine Steuerungsvorrichtung. Dabei ist die Kamera insbesondere an einem Fahrzeug montierbar. Mit der Klappvorrichtung ist die Kamera von einem eingeklappten Zustand in einen ausgeklappten Zustand überführbar. Mit der Steuerungsvorrichtung sind Bilddaten der Kamera empfangbar, gleichzeitig ist die Klappvorrichtung von der Steuerungsvorrichtung ansteuerbar. Sollte ein Kamerabild, beispielsweise zur Anzeige für den Fahrer, gewünscht werden, so ist insbesondere vorgesehen, dass mit der Klappvorrichtung die Kamera ausgeklappt wird, sodass diese anschließend Bilddaten einer Szenerie liefern kann. Erfindungsgemäß ist weiterhin vorgesehen, dass mit der Steuerungsvorrichtung zumindest ein Datensatz speicherbar ist. Der Datensatz umfasst einen geografischen Ort, an dem bereits eine Kalibrierung der Kamera durchgeführt wurde. Ebenso umfasst der Datensatz ein Gütemaß für die Güte der Kalibrierung der Kamera, die an dem gespeicherten Ort ausgeführt wurde. Somit steht dem Fahrzeug insbesondere eine Karte zur Verfügung, an denen Orte gekennzeichnet sind, an denen eine Kalibrierung durchgeführt wurde, wobei ein Gütemaß der Kalibrierung vorhanden ist. Dies erlaubt eine sichere und zuverlässige Kalibrierung, wobei die Kalibrierungszeiten vorteilhafterweise reduzierbar sind.

Die Unteransprüche haben vorteilhafte Ausgestaltungen der Erfindung zum Inhalt.

Erfindungsgemäß ist die Steuerungseinheit ausgebildet, einen aktuellen geografischen Ort des Kamerasystems zu bestimmen. Dabei kann die Steuerungsvorrichtung insbesondere ein Navigationsmodul umfassen, oder mit weiteren Komponenten verbunden sein, mit denen eine Erfassung des aktuellen geografischen Ortes ermöglicht ist. Insbesondere kann es sich dabei um ein GPS-System eines Fahrzeuges handeln. Die Kenntnis über den aktuellen geografischen Ort des Kamerasystems erlaubt in vorteilhafter Weise die gespeicherten Datensätze auszuwerten, um festzustellen, ob an dem aktuellen geografischen Ort bereits eine Kalibrierung durchgeführt wurde, was sich in dem Vorhandensein eines Datensatzes widerspiegelt.

Erfindungsgemäß ist die Steuerungsvorrichtung weiterhin ausgebildet, eine Kalibrierung der Kamera auszuführen oder zu veranlassen. Dazu weist die Steuerungseinheit ein Kalibrierungsmodul auf oder ist mit einem solchen Kalibrierungsmodul für die Kamera verbunden. Die Kalibrierung wird dann durchgeführt, wenn der aktuelle geografische Ort mit einem in einem Datensatz gespeicherten geografischen Ort übereinstimmt. Da bereits an diesem Ort eine Kalibrierung durchgeführt wurde, ist somit von einer kurzen Kalibrierungszeit auszugehen. Dies bedeutet auch, dass die Kamera zur Kalibrierung nur für einen kurzen Zeitraum in den ausgeklappten Zustand überführt werden muss. Somit lassen sich insbesondere negative äußere Einflüsse, wir ein Verschmutzen der Kamera oder eine Beschädigung durch aufgewirbelte Objekte, vermeiden.

Erfindungsgemäß ist die Steuerungsvorrichtung ausgebildet, eine Kalibrierung der Kamera dann auszuführen oder zu veranlassen, wenn das in dem Datensatz gespeicherte Gütemaß einen vordefinierten Wert überschreitet. Somit umfasst der Datensatz neben einem Ort, an dem eine Kalibrierung durchgeführt wurde, auch ein Maß für die Güte der durchgeführten Kalibrierung. Sollte dieses Gütemaß einen vordefinierten Wert nicht überschreiten, so ist davon auszugehen, dass eine Kalibrierung an diesem Ort nur schwierig möglich ist. Die Kamera müsste daher über einen langen Zeitraum ausgeklappt sein, sodass die Kamera über einen langen Zeitraum äußeren Einflüssen ausgesetzt ist. Daher ist es vorteilhaft, an diesem Ort keine Kalibrierung durchzuführen. Dahingegen ist es vorteilhaft, eine Kalibrierung an einem Ort durchzuführen, für den ein großes Gütemaß gespeichert ist. In diesem Fall ist eine kurze Kalibrierungszeit zu erwarten, weswegen die Kamera nur über einen kurzen Zeitraum in dem ausgeklappten Zustand verbleiben muss.

Vorteilhafterweise weist die Klappvorrichtung einen Deckel auf. Der Deckel ist insbesondere unmittelbar an der Kamera angebracht. Sollte sich die Kamera in dem eingeklappten Zustand befinden, so ist vorgesehen, dass der Deckel die Kamera vor äußeren Einflüssen schützt. Besonders vorteilhaft ist der Deckel derart angebracht, dass dieser mit der Karosserie des Fahrzeuges abschließt, wenn sich die Kamera in dem eingeklappten Zustand befindet. Somit ist eine Verschmutzungsgefahr oder die Gefahr einer Beschädigung der Kamera durch äußere Einflüsse minimiert.

Die Steuerungsvorrichtung ist weiterhin eingerichtet, zumindest einen gespeicherten Datensatz mit einem weiteren Kamerasystem oder mit einem Server auszutauschen. Somit ist der zumindest eine gespeicherte Datensatz mit anderen Systemen austauschbar. Dies ermöglicht einerseits eine Kommunikation verschiedener Kamerasysteme untereinander, was insbesondere durch eine Kommunikation der die Kamerasysteme tragenden Fahrzeuge ermöglicht werden kann. Ebenso ist es möglich, dass die Steuerungsvorrichtung Daten von einem Server empfängt, sodass stets eine Anzahl von aktuellen Datensätzen vorhanden ist. Dadurch ist gewährleistet, dass dem Steuerungssystem stets eine Vielzahl von Orten bekannt ist, an denen eine Kalibrierung der Kamera schnell und sicher durchführ bar ist.

Zur Ausgabe ist insbesondere vorgesehen, dass die Steuerungsvorrichtung ein Bild und/oder einen Datenstrom ausgeben kann. Die von der Steuerungsvorrichtung ausgebbaren Bilder und/oder Datenströme sind insbesondere an ein Anzeigegerät, wie insbesondere ein Display, übertragbar. Dabei ist vorgesehen, dass das Bild und/oder der Datenstrom zumindest eine Abbildung einer Szenerie durch die Kamera mit überlagerten Overlays ausweist. Die Overlays sind insbesondere Anzeigen über einen Fahrtweg des Fahrzeuges bei einem maximalen Lenkwinkel und/oder bei einem aktuellen Lenkwinkel. Insbesondere ist vorgesehen, dass mit den Overlays eine Orientierung des Fahrers des Fahrzeuges auf dem Bild und/oder dem Datenstrom vereinfacht ist.

Die Erfindung betrifft außerdem ein Fahrzeug, wobei das Fahrzeug ein Kamerasystem wie zuvor beschrieben umfasst. Dabei ist insbesondere vorgesehen, dass mit der Kamera des Kamerasystems ein Heckbereich des Fahrzeuges erfassbar ist, sodass die Kamera Teil eines Rear-View-Systems des Fahrzeuges darstellt. Alternativ oder zusätzlich kann das Kamerasystem Teil eines Surround-View-Systems des Fahrzeuges sein.

Schließlich betrifft die Erfindung ein Verfahren zum Betreiben eines Kamerasystems gemäß Anspruch 6. Dabei ist vorgesehen, dass das Kamerasystem an einem Fahrzeug verwendbar ist. Weiterhin ist vorgesehen, dass das Kamerasystem eine Kamera und eine Klappvorrichtung umfasst.

Insbesondere umfasst das Kamerasystem auch eine Steuerungsvorrichtung, mit der die Klappvorrichtung ansteuerbar ist und mit der Bilddaten von der Kamera empfangbar sind. Die Klappvorrichtung wiederum ist ausgebildet, die Kamera von einem eingeklappten Zustand in einen ausgeklappten Zustand zu überführen. Insbesondere ist die Klappvorrichtung außerdem eingerichtet, die Kamera von einem ausgeklappten Zustand in den eingeklappten Zustand zu überführen. Das Verfahren umfasst die folgenden Schritte: Zunächst wird ein aktueller geografischer Ort des Kamerasystems bestimmt. Anschließend erfolgt ein Auffinden eines Datensatzes aus einem Speicher, wobei in dem Speicher eine Vielzahl von gespeicherten Datensätzen vorhanden ist. Jeder gespeicherte Datensatz umfasst einen geografischen Ort, an dem eine Kalibrierung der Kamera bereits durchgeführt wurde. Somit ist ein Datensatz erfolgreich aufgefunden, wenn der aktuelle geografische Ort, der in dem zuvor beschriebenen Schritt bestimmt wurde, mit einem in einem Datensatz gespeicherten Ort übereinstimmt. Sollte dies der Fall sein, so wird die Kamera in den ausgeklappten Zustand überführt, wonach anschließend eine Kalibrierung durchgeführt wird. Auf diese Weise ist sichergestellt. Dass für die Kalibrierung nur eine kurze Zeit benötigt wird, da der Ort, an dem die Kalibrierung durchgeführt wird, bereits bekannt ist, da hier zuvor eine Kalibrierung ausgeführt wurde.

Erfindungsgemäß ist in den Datensätzen neben dem geografischen Ort auch ein Gütemaß für die an diesem Ort durchgeführte Kalibrierung gespeichert. Dabei ist vorgesehen, dass der Schritt des Überführens der Kamera in einen ausgeklappten Zustand und des Kalibrierens der Kamera nur dann ausgeführt wird, wenn das Gütemaß einen vordefinierten Wert überschreitet. Somit ist sichergestellt, dass die Kalibrierung nur an solchen Orten ausgeführt wird, an denen bereits zuvor erkannt wurde, dass sich der jeweilige Ort für eine Kalibrierung gut eignet. Somit werden lange Zeiträume, in denen sich die Kamera in einem ausgeklappten Zustand befindet, reduziert. Besonders vorteilhaft ist außerdem vorgesehen, dass das Gütemaß nach dem Durchführen der Kalibrierung aktualisiert wird. Somit ist insbesondere feststellbar, wenn sich die Gegebenheiten an einem geografischen Ort verschlechtert haben, sodass sich der Ort weniger gut oder gar nicht mehr für eine Kalibrierung der Kamera eignet.

Die Erfindung wird nun anhand eines Ausführungsbeispiels unter Berücksichtigung der beigefügten Zeichnungen im Detail beschrieben. In den Zeichnungen ist:
- Figur 1: eine schematische Abbildung eines Fahrzeuges mit einem Kamerasystem gemäß einem Ausführungsbeispiel der Erfindung und
- Figur 2: eine schematische Darstellung einer Abbildung einer Szenerie durch das Kamerasystem gemäß dem Ausführungsbeispiel der Erfindung.

### Ausführungsformen der Erfindung

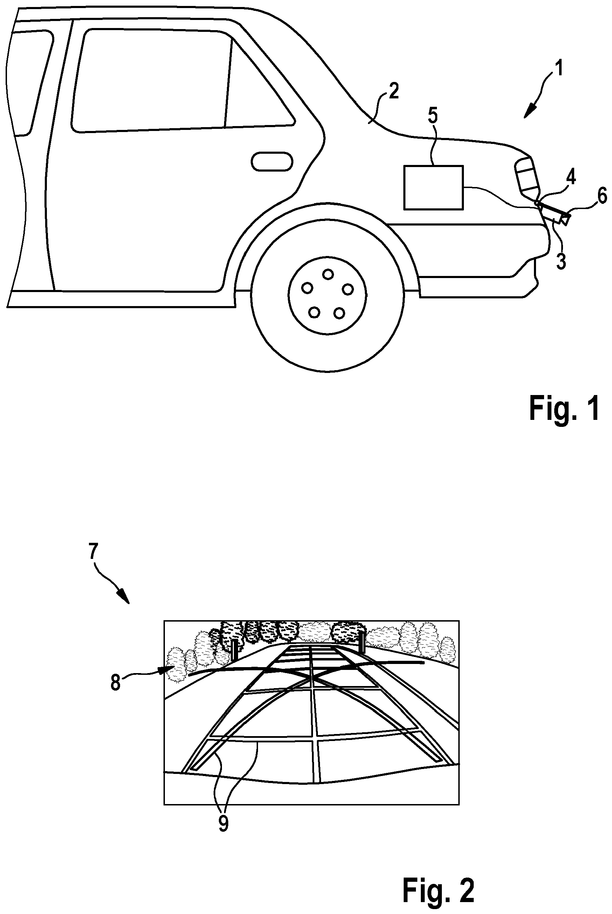

Figur 1 zeigt eine schematische Ansicht eines Fahrzeuges 2, das ein Kamerasystem 1 gemäß einem Ausführungsbeispiel der Erfindung aufweist. Das Kamerasystem 1 umfasst eine Kamera 3, die an einem Deckel 6 befestigt ist. Der Deckel 6 ist Teil einer Ausklappvorrichtung 4, mit der die Kamera 3 aus der Karosserie des Fahrzeuges 2 ausklappbar ist. Befindet sich die Kamera 3 in einem ausgeklappten Zustand, so kann diese eine rückwärtigen Bereich des Fahrzeuges 2 erfassen. Ist die Kamera 3 dagegen in den eingeklappten Zustand überführt, so schließt der Deckel 6 insbesondere mit der Karosserie des Fahrzeuges 2 ab, sodass die Kamera 3 vor äußeren Einflüssen geschützt ist.

Die Kamera 3 ist mit der Steuerungseinheit 5 verbunden, wobei die Steuerungseinheit 5 zum Empfangen von Bilddaten der Kamera 3 ausgebildet ist. Ebenso ist die Ausklappvorrichtung 4 mit der Steuerungsvorrichtung 5 verbunden, sodass die Ausklappvorrichtung 4 von der Steuerungsvorrichtung 5 ansteuerbar ist. Die Steuerungsvorrichtung 5 kann daher Abbildungen mit der Kamera 3 dadurch aufnehmen, dass zunächst die Ausklappvorrichtung 4 angesteuert wird, um die Kamera 3 in einen ausgeklappten Zustand zu überführen, um anschließend Bilddaten von der Kamera 3 zu empfangen.

Die Steuerungsvorrichtung 5 ist vorteilhafterweise mit weiteren Komponenten des Fahrzeuges 2 verbunden. Insbesondere ist die Steuerungsvorrichtung 5 mit einer Anzeigevorrichtung verbunden, sodass ein Anzeigebild 7 ausgebbar ist. Das Anzeigebild 7 ist beispielhaft in Figur 2 dargestellt. Das Anzeigebild 7 umfasst eine Abbildung einer Szenerie 8, die mit Overlays 9 überlagert ist. Die Overlays 9 zeigen einerseits einen Weg, den das Fahrzeug 2 bei maximalem Lenkwinkel nach links oder nach rechts beschreiben wird, sowie insbesondere Hilfsmittel zum Abschätzen eines Abstands zu einem Hindernis in der Peripherie des Fahrzeuges 2. Damit die Overlays 9 durch die verkippte Anordnung der Kamera 3 in dem ausgeklappten Zustand nicht ebenfalls verkippt an dem Anzeigebild 7 erscheinen, muss die Kamera 3 relativ zum Fahrzeug 2 kalibriert werden. Daher ist vorgesehen, dass mit der Steuerungsvorrichtung 5 die Kamera 3 kalibrierbar ist.

Sobald eine Kalibrierung durchgeführt worden ist, wird ein geografischer Ort der Kalibrierung zusammen mit einem Gütemaß der Kalibrierung in einem Datensatz gespeichert. Der Datensatz ist von der Steuerungsvorrichtung 5 speicherbar. Somit stehen dem Fahrzeug 2 Daten zur Verfügung, mit denen die Durchführung der Kalibrierung verkürzt werden kann. So ist insbesondere vorgesehen, dass mit der Steuerungsvorrichtung 5 ein aktueller Ort des Kamerasystems 1 bestimmbar ist. Dazu ist das Kamerasystem 1, insbesondere die Steuerungsvorrichtung 5, mit einem Navigationsgerät des Fahrzeuges 2 verbunden. Das Navigationsgerät kann vorteilhafterweise ein GPS-System sein. Weiterhin ist vorgesehen, dass die Steuerungsvorrichtung 5 fortlaufend den aktuellen geografischen Ort des Fahrzeuges 2 und damit des Kamerasystems 1 mit den gespeicherten geografischen Orten in den gespeicherten Datensätzen vergleicht. Sollte eine Übereinstimmung erkannt werden, so befindet sich das Fahrzeug 2 an einem Ort, an dem bereits zuvor eine Kalibrierung der Kamera 3 ausgeführt wurde. Gleichzeitig ist über das zusätzlich gespeicherte Gütemaß erkennbar, welche Güte die durchgeführte Kalibrierung aufgewiesen hat. Somit ist bestimmbar, ob an diesem Ort erneut eine Kalibrierung durchgeführt werden soll, was dann der Fall ist, wenn das gespeicherte Gütemaß eine vordefinierte Schwelle, wie insbesondere einen vordefinierten Wert, überschreitet. Sollte dies der Fall sein, dann ist davon auszugehen, dass die zuvor durchgeführte Kalibrierung eine hohe Güte aufgewiesen hat, sodass bei der erneuten Kalibrierung mit einer kurzen Kalibrierungszeit zu rechnen ist. Daher muss die Kamera 3 nur für einen kurzen Zeitraum in den ausgeklappten Zustand überführt werden.

Nach der Kalibrierung ist insbesondere vorgesehen, dass das Kalibrierungsmaß aktualisiert wird, indem für die erneut durchgeführte Kalibrierung das Gütemaß berechnet wird. Somit ist erkennbar, ob sich die Eignung des Orts zur Durchführung der Kalibrierung geändert hat. So kann insbesondere durch äußere Veränderung des Ortes die erneute Kalibrierung deutlich mehr Zeit beanspruchen als die zuvor durchgeführte Kalibrierung. In diesem Fall wird durch die Aktualisierung des Gütemaßes ein schlechterer Wert gespeichert, sodass an diesem Ort keine weitere Kalibrierungen mehr durchgeführt werden.

Insbesondere ist auch vorgesehen, dass von der Steuerungsvorrichtung 5 eine Navigationsroute, der das Fahrzeug 2 folgen soll, mit den gespeicherten Datensätzen abgeglichen wird. Somit ist bereits vorab erkennbar, welche Orte mit hohem Gütemaß das Fahrzeug 2 erreichen wird. Ebenso ist vorteilhafterweise vorgesehen, dass die Datensätze zwischen verschiedenen Fahrzeugen 2 und/oder verschiedenen Kamerasystemen 1 austauschbar sind. Ebenso ist vorgesehen, dass die Datensätze mit einem zentralen Server austauschbar sind. Somit ist sichergestellt, dass stets eine ausreichend hohe Anzahl von Datensätzen zur Verfügung steht, sodass stets eine kurze Kalibrierungszeit gewährleistet ist.

Mit dem Kamerasystem 1 gemäß dem gezeigten Ausführungsbeispiel lässt sich somit die Kalibrierungszeit der Kamera 3 erheblich verkürzen, indem die Kalibrierung auf Orte beschränkt wird, an denen eine Kalibrierung rasch durchgeführt werden kann. Auf diese Weise wird die Anzahl der notwendigen Überführungen der Kamera 3 in den ausgeklappten Zustand minimiert, wodurch die Kamera 3 insbesondere vor Verschmutzungen geschützt ist. Ebenso wird eine Stromaufnahme des Kamerasystems 1 reduziert, da durch die Verkürzung der Kalibrierungszeit auch der Zeitraum, in dem die Kamera 3 aktiv sein muss, reduziert wird.

## Patentansprüche

1. Kamerasystem (1) für ein Fahrzeug (2), umfassend:
- eine Kamera (3),
- eine Klappvorrichtung (4) zum wechselweisen Überführen der Kamera (3) von einem ausgeklappten Zustand in einen eingeklappten Zustand, und
- eine Steuerungsvorrichtung (5), die zum Empfang von Bilddaten der Kamera (3) und zum Ansteuern der Klappvorrichtung (4) ausgebildet ist,
**dadurch gekennzeichnet, dass**
- mit der Steuerungsvorrichtung (5) zumindest ein Datensatz speicherbar ist, der einen geografischen Ort umfasst, an dem eine Kalibrierung der Kamera (3) ausgeführt wurde, und der ein Gütemaß für die Güte der Kalibrierung umfasst,
- die Steuerungsvorrichtung (5) ausgebildet ist, einen aktuellen geografischen Ort des Kamerasystems (1) zu bestimmen,
- die Steuerungsvorrichtung (5) ausgebildet ist, eine Kalibrierung der Kamera (3) auszuführen oder zu veranlassen, wenn der aktuelle geografische Ort mit einem in dem Datensatz gespeicherten geografischen Ort übereinstimmt, und
- die Steuerungsvorrichtung (5) ausgebildet ist, eine Kalibrierung der Kamera (3) auszuführen oder zu veranlassen, wenn das Gütemaß einen vordefinierten Wert überschreitet.

2. Kamerasystem (1) nach Anspruch 1, **dadurch gekennzeichnet, dass** die Klappvorrichtung (4) einen Deckel (6) aufweist, wobei die Kamera (3) durch den Deckel (6) in dem eingeklappten Zustand vor äußeren Einflüssen abgeschottet ist.

3. Kamerasystem (1) nach einem der vorhergehenden Ansprüche, **dadurch gekennzeichnet, dass** mit der Steuerungsvorrichtung (5) zumindest ein Datensatz mit einem weiteren Kamerasystem (1) und/oder mit einem Server austauschbar ist.

4. Kamerasystem (1) nach einem der vorhergehenden Ansprüche, **dadurch gekennzeichnet, dass** mit der Steuerungsvorrichtung (5) ein Bild und/oder ein Datenstrom ausgebbar ist, wobei das Bild und/oder der Datenstrom eine Abbildung einer Szenerie durch die Kamera (3) mit überlagerten Overlays aufweist.

5. Fahrzeug (2) umfassend ein Kamerasystem (1) nach einem der vorhergehenden Ansprüche.

6. Verfahren zum Betreiben eines Kamerasystems (1), wobei das Kamerasystem (1) an einem Fahrzeug (2) verwendbar ist und eine Kamera (3) und eine Klappvorrichtung (4) umfasst, wobei die Kamera (3) mit der Klappvorrichtung (4) von einem eingeklappten Zustand in einen ausgeklappten Zustand überführbar ist, **gekennzeichnet durch** die Schritte:
- Bestimmen eines aktuellen geografischen Orts des Kamerasystems (1),
- Auffinden eines Datensatzes aus einem Speicher mit einer Vielzahl von gespeicherten Datensätzen, wobei jeder Datensatz einen geografischen Ort umfasst, an dem eine Kalibrierung der Kamera (3) durchgeführt wurde, und wobei ein Datensatz dann aufgefunden ist, wenn ein in einem Datensatz gespeicherter Ort mit dem bestimmten aktuellen geografischen Ort übereinstimmt, und
- Überführen der Kamera (3) in den ausgeklappten Zustand und Durchführen einer Kalibrierung der Kamera (3), wenn mindestens ein Datensatz aufgefunden wurde,
- wobei die in dem Speicher gespeicherten Datensätze neben einem geografischen Ort auch ein Gütemaß für eine Güte der an dem geografischen Ort durchgeführten Kalibrierung der Kamera (3) gespeichert ist, und
- wobei der Schritt des Überführens in den ausgeklappten Zustand und Durchführens der Kalibrierung nur dann ausgeführt wird, wenn das Gütemaß einen vordefinierten Wert überschreitet.

## Claims

1. Camera system (1) for a vehicle (2), comprising:
- a camera (3),
- a folding apparatus (4) for alternately transferring the camera (3) from a folded-out state to a folded-in state, and
- a control apparatus (5) which is designed to receive image data from the camera (3) and to control the folding apparatus (4),
**characterized in that**
- the control apparatus (5) can be used to store at least one data record comprising a geographical location at which the camera (3) was calibrated and a measure of the quality of the calibration,
- the control apparatus (5) is designed to determine a current geographical location of the camera system (1),
- the control apparatus (5) is designed to carry out or prompt calibration of the camera (3) if the current geographical location corresponds to a geographical location stored in the data record, and
- the control apparatus (5) is designed to carry out or prompt calibration of the camera (3) if the measure of quality exceeds a predefined value.

2. Camera system (1) according to Claim 1, **characterized in that** the folding apparatus (4) has a cover (6), wherein the camera (3) is sealed off from external influences by means of the cover (6) in the folded-in state.

3. Camera system (1) according to one of the preceding claims, **characterized in that** the control apparatus (5) can be used to interchange at least one data record with a further camera system (1) and/or with a server.

4. Camera system (1) according to one of the preceding claims, **characterized in that** the control apparatus (5) can be used to output an image and/or a data stream, wherein the image and/or the data stream has/have a representation of scenery from the camera (3) with superimposed overlays.

5. Vehicle (2) comprising a camera system (1) according to one of the preceding claims.

6. Method for operating a camera system (1), wherein the camera system (1) can be used on a vehicle (2) and comprises a camera (3) and a folding apparatus (4), wherein the camera (3) can be transferred from a folded-in state to a folded-out state using the folding apparatus (4), **characterized by** the steps of:
- determining a current geographical location of the camera system (1),
- finding a data record from a memory having a multiplicity of stored data records, wherein each data record comprises a geographical location at which the camera (3) was calibrated, and wherein a data record is found when a location stored in a data record corresponds to the determined current geographical location, and
- transferring the camera (3) to the folded-out state and calibrating the camera (3) when at least one data record has been found,
- wherein the data records stored in the memory, in addition to a geographical location, a measure of a quality of the calibration of the camera (3) carried out at the geographical location is also stored, and
- wherein the step of transferring the camera to the folded-out state and carrying out the calibration is carried out only when the measure of quality exceeds a predefined value.

## Revendications

1. Système de caméra (1) pour un véhicule (2), comprenant :
- une caméra (3),
- un dispositif de rabattement (4) destiné à transférer en alternance la caméra (3) d'un état déployé à un état escamoté et
- un dispositif de commande (5) qui est conçu pour recevoir des données d'image de la caméra (3) et pour commander le dispositif de rabattement (4),
**caractérisé en ce que**
- au moins un jeu de données peut être enregistré avec le dispositif de commande (5), lequel comprend un lieu géographique au niveau duquel a été effectué un étalonnage de la caméra (3) et lequel comprend une mesure de qualité pour la qualité de l'étalonnage,
- le dispositif de commande (5) est configuré pour déterminer un lieu géographique actuel du système de caméra (1),
- le dispositif de commande (5) est configuré pour effectuer ou faire effectuer un étalonnage de la caméra (3) lorsque le lieu géographique actuel coïncide avec un lieu géographique enregistré dans le jeu de données et
- le dispositif de commande (5) est configuré pour effectuer ou faire effectuer un étalonnage de la caméra (3) lorsque la mesure de qualité dépasse une valeur prédéfinie.

2. Système de caméra (1) selon la revendication 1, **caractérisé en ce que** le dispositif de rabattement (4) possède un couvercle (6), la caméra (3) étant cloisonnée contre les influences extérieures par le couvercle (6) à l'état escamoté.

3. Système de caméra (1) selon l'une des revendications précédentes, **caractérisé en ce que** le dispositif de commande (5) permet d'échanger au moins un jeu de données avec un système de caméra (1) supplémentaire et/ou avec un serveur.

4. Système de caméra (1) selon l'une des revendications précédentes, **caractérisé en ce qu'**une image et/ou un flux de données peuvent être délivrés par le dispositif de commande (5), l'image et/ou le flux de données possédant une représentation d'un paysage par la caméra (3) avec des recouvrements en superposition.

5. Véhicule (2) comprenant un système de caméra (1) selon l'une des revendications précédentes.

6. Procédé pour faire fonctionner un système de caméra (1), le système de caméra (1) pouvant être utilisé sur un véhicule (2) et comprenant une caméra (3) ainsi qu'un dispositif de rabattement (4),
la caméra (3) pouvant être transférée par le dispositif de rabattement (4) d'un état escamoté à un état déployé, **caractérisé par** les étapes suivantes :
- détermination d'un lieu géographique actuel du système de caméra (1),
- recherche d'un jeu de données dans une mémoire comprenant une pluralité de jeux de données enregistrés, chaque jeu de données comprenant un lieu géographique au niveau duquel a été effectué un étalonnage de la caméra (3) et un jeu de données étant trouvé lorsqu'un lieu enregistré dans un jeu de données coïncide avec le lieu géographique actuellement déterminé, et
- transfert de la caméra (3) dans l'état déployé et réalisation d'un étalonnage de la caméra (3) lorsqu'au moins un jeu de données a été trouvé,
- les jeux de données enregistrés dans la mémoire, outre un lieu géographique, également une mesure de qualité pour une qualité de l'étalonnage de la caméra (3) effectué au lieu géographique étant enregistrée, et
- l'étape de transfert dans l'état déployé et de réalisation de l'étalonnage n'étant exécutée que lorsque la mesure de qualité dépasse une valeur prédéfinie.
